(19) Europäisches Patentamt
European Patent Office
Office européen des brevets

(11) **EP 2 199 188 A2**

(12) **EUROPEAN PATENT APPLICATION**

(43) Date of publication:
**23.06.2010 Bulletin 2010/25**

(51) Int Cl.:
***B62D 15/02*** *(2006.01)*

(21) Application number: **09177706.0**

(22) Date of filing: **02.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **19.12.2008 JP 2008323844**

(71) Applicant: **Kabushiki Kaisha Toyota Jidoshokki Kariya-shi, Aichi 448-8671 (JP)**

(72) Inventors:
• **Kimura, Tomio**
  **Kariya-shi Aichi 448-8671 (JP)**
• **Shimazaki, Kazunori**
  **Kariya-shi Aichi 448-8671 (JP)**
• **Nakashima, Yutaka**
  **Kariya-shi Aichi 448-8671 (JP)**
• **Hika, Koji**
  **Kariya-shi Aichi 448-8671 (JP)**

(74) Representative: **TBK-Patent**
  **Bavariaring 4-6**
  **80336 München (DE)**

(54) **Parking assist apparatus**

(57) A parking assist apparatus has a vehicle moving path providing device for providing a standard parking assist sequence, wherein the standard parking assist sequence has at least one moving pattern for moving a vehicle to a target parking position in a parking. The parking assist apparatus further has a position error detecting means for detecting a position error between an initial target stop position and an actual stop position and a vehicle moving path adding means for adding at least one additional moving pattern to the standard parking assist sequence thereby to form a modified parking assist sequence from the actual stop position to the target parking position, based on the position error.

# FIG.1

## Description

BACKGROUND OF THE INVENTION

The present invention relates to a parking assist apparatus.

A parking assist apparatus is disclosed in Japanese Patent Application Publication 2001-18821 which provides a parking assistance in moving a vehicle to a parking area based on a standard parking assist sequence composed of moving the vehicle forward from an initial target stop position to a stop position reachable after moving forward and moving backward from the stop position to a target parking position. In starting the parking assist operation, when the vehicle stops at a position that fails to coincide with the initial target stop position, the parking assist apparatus changes the moving distance of any specific moving pattern of the standard parking assist sequence so that the vehicle moves in the parking area properly.

The moving pattern as used in the present invention refers to six patterns, i.e., moving straight forward, moving straight backward, moving forward while turning rightward, moving forward while turning leftward, moving backward while turning rightward and moving backward while turning leftward. Each moving pattern consists of two elements, i.e., moving distance and turning radius. The above Publication shows a control method in which the moving distance in moving straight forward is extended. This does not mean addition of a moving pattern to the standard parking assist sequence but a change of the element (moving distance) of the moving pattern (moving straight forward).

In the above Publication, the area within which the stop position of the vehicle is allowed to be away from the initial target stop position for the vehicle to move into the parking area from the stop position properly with the aid of the parking assist apparatus is limited. In other words, if the vehicle stops at a position far away from the initial target stop position, it is difficult for the vehicle to move into the parking area properly. Furthermore, since the parking assist apparatus according to the above Publication only allows for the change of a moving distance of any specific moving pattern of the standard parking assist sequence, the degree of freedom for the vehicle to move for parking is so small that the parking assist apparatus can not generate a modified parking assist sequence in some cases.

Therefore, the present invention is directed to providing a parking assist apparatus that makes it possible to move a vehicle into a target parking position or generate a modified parking assist sequence before reaching the target parking position when the vehicle stops at a position that is too far from the initial target stop position.

SUMMARY OF THE INVENTION

A parking assist apparatus has a vehicle moving path providing device for providing a standard parking assist sequence, wherein the standard parking assist sequence has at least one moving pattern for moving a vehicle to a target parking position in a parking. The parking assist apparatus further has a position error detecting means for detecting a position error between an initial target stop position and an actual stop position and a vehicle moving path adding means for adding at least one additional moving pattern to the standard parking assist sequence thereby to form a modified parking assist sequence from the actual stop position to the target parking position, based on the position error.

Other aspects and advantages of the invention will become apparent from the following description, taken in conjunction with the accompanying drawings, illustrating by way of example the principles of the invention.

BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:

FIG. 1 is a plan view of a vehicle equipped with a parking assist apparatus and a parking area for the vehicle according to a first embodiment of the present invention;

FIG. 2 is a schematic plan view of a mark used in the first embodiment;

FIG. 3 is a schematic configuration diagram showing various components of the parking assist apparatus according to the first embodiment;

FIG. 4 is a plan view showing the vehicle and the parking area and describing a standard parking assist sequence stored in a vehicle moving path storing means of the parking assist apparatus according to the first embodiment;

FIG. 5 is a graph showing a relation between the steering angle and the moving distance of the vehicle when the vehicle moves from an initial target stop position to a target parking position based on the standard parking assist sequence;

FIG. 6 is a plan view showing the vehicle and the parking area and describing a vehicle moving path from an actual initial stop position to the target parking position according to the first preferred embodiment;

FIG. 7 is a graph showing a relation between the steering angle and the moving distance of the vehicle from the actual initial stop position to the target parking position according to the first preferred embodiment;

FIG. 8 is a plan view of a vehicle and a parking area and describing a vehicle moving path from an actual initial stop position to a target parking position according to a second preferred embodiment;

FIG. 9 is a graph showing a relation between the steering angle of the vehicle and the moving distance of the vehicle from the actual initial stop position to the target parking position according to the second preferred embodiment;

FIG. 10 is a plan view of a vehicle and a parking area and describing a vehicle moving path from an actual initial stop position to a target parking position according to a third preferred embodiment;

FIG. 11 is a graph showing a relation between the steering angle and the moving distance of the vehicle from the actual initial stop position to the target parking position according to the third preferred embodiment;

FIG. 12 is a plan view of a vehicle and a parking area and describing a vehicle moving path from an actual initial stop position to a target parking position according to a fourth preferred embodiment;

FIG. 13 is a graph showing a relation between the steering angle and the moving distance of the vehicle from the actual initial stop position to the target parking position according to the fourth preferred embodiment; and

FIG. 14 is a graph showing a relation between the steering angle and the moving distance of a vehicle based on an alternative standard parking assist sequence.

DETAILED DESCRIPTION OF THE PREFERRED EMBODIMENTS

(First Embodiment)

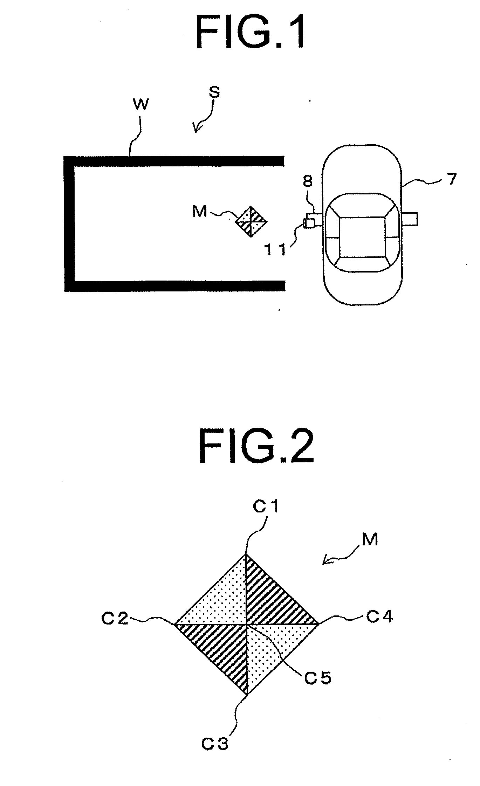

Several embodiments according to the present invention will now be described with reference to FIGS. 1 through 14.

A vehicle 7 equipped with a parking assist apparatus 100 and a parking area S for the vehicle 7 according to the first embodiment is shown in plan view in FIG. 1. A rectangular parking area having walls on three sides thereof is designated by symbol S and a mark M indicative of various information about the parking area S is set on the floor of the parking area S. The vehicle 7 is equipped with a side monitor camera 11 incorporated in a door mirror 8 for taking an image of the mark M.

The mark M is fixed to a predetermined position with a predetermined positional relation to the parking area S and the parking assist apparatus 100 is informed of such positional relation. The mark M may be, for example, of a square-shaped figure by four isosceles right angles connected each other, as shown in FIG. 2. Any two adjacent isosceles right angles are coded by different colors and the mark M has five feature points C1 through C5, which are determined by the intersection points of the sides of the isosceles right angles, as shown in FIG. 2.

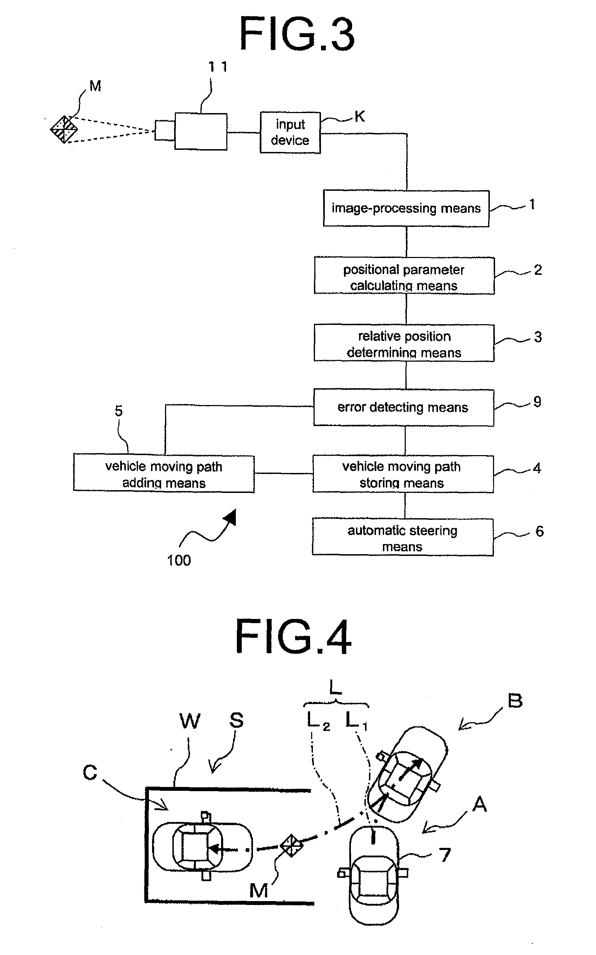

As shown in FIG. 3, the side monitor camera 11 is connected to an input device K. The input device K is connected to an image processing means 1 that extracts the feature points from an image of the mark M captured by the side monitor camera 11 and recognizes them on the image in two-dimensional coordinate. The image processing means 1 is connected to a positional parameter calculating means 2 that calculates a positional parameter of the side monitor camera 11 relative to the position of mark M. The positional parameter calculating means 2 is connected to a relative position determining means 3 that determines a positional relation between the vehicle 7 and the parking area S. The relative position determining means 3 is connected to an error detecting means 9 that detects a position error between an initial target stop position A (see FIG. 4) which will be described later and an actual initial stop position of the vehicle 7 based on the positional relation of the vehicle 7 relative to the parking area S. A combination of the relative position determining means 3 and the error detecting means 9 corresponds to a position error detecting means for detecting a position of the vehicle and the position error as described before. The error detecting means 9 is connected to a vehicle moving path storing means 4 that stores a standard parking assist sequence L (see FIG. 4) composed of a predetermined moving pattern for moving the vehicle 7 in the parking area S. The vehicle moving path storing means 4 as used herein corresponds to a vehicle moving path providing means for providing the standard parking assist sequence L. The vehicle moving path storing means 4 is connected to a vehicle moving path adding means 5 for generating a modified parking assist sequence by adding other moving pattern to the standard parking assist sequence L based on the position error detected by the error detecting means 9 and an automatic steering means 6 that executes a parking operation by steering the vehicle 7 automatically based on the standard parking assist sequence or the modified parking assist sequence.

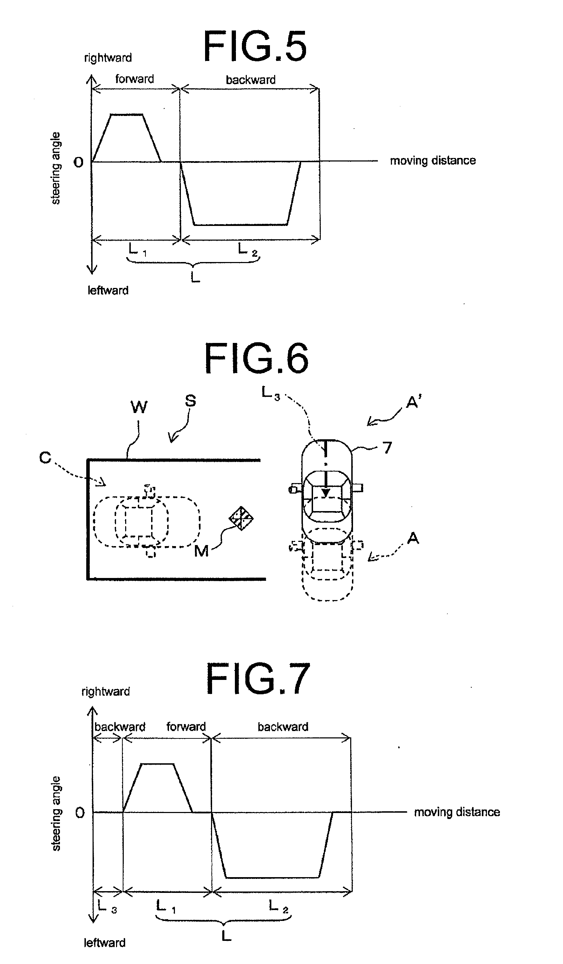

The standard parking assist sequence L stored in the vehicle moving path storing means 4 provides a path along which the vehicle 7 is moved from the initial target stop position A as the starting point to a target parking position C through a stop position B reachable after moving forward from the position A, as shown in FIG. 4. In other words, the standard parking assist sequence L consists of the first moving path L1 according to which the vehicle 7 is moved forward to the stop position B while being turned rightward and the second moving path L2 according to which the vehicle 7 is moved backward from the stop position B to the target parking position C while being turned toward the target parking position C. As shown in FIG. 5, when the vehicle 7 moves along the first moving path L1, the vehicle 7 is moved forward while being turned rightward, or away from the parking position C, with an increasing steering angle.

When the steering angle reaches a certain angle, the vehicle 7 is moved further forward while maintaining the steering angle unchanged and then returning the steering angle to zero. The vehicle 7 is further moved forward with the steering angle kept at zero until the vehicle 7 reaches the stop position B. When the vehicle 7 is moved along the second moving path L2, the vehicle 7 is moved backward while increasing the steering angle in the direction that makes the vehicle 7 to approach the target parking position C. When the steering angle reaches a certain angle, the vehicle 7 is backed further while keeping the steering angle unchanged and then returning the steering angle toward zero. When the steering angle reaches zero, the vehicle 7 is moved straight backward with the steering angle kept at zero until the vehicle 7 reaches the target parking position C. The standard parking assist sequence has a determined combination of different moving patterns and each of moving patterns has a fixed turning radius and a fixed moving distance.

The following will describe the operation of the parking assist apparatus 100 of the first embodiment. Let us suppose a case that the vehicle 7 equipped with the parking assist apparatus 100 according to the first preferred embodiment is to be moved to the target parking position C in the parking area S, as shown in FIG. 6, through the guidance of the parking assist apparatus 100. Firstly, the vehicle 7 needs to be at the initial target stop position A. Whether or not the vehicle 7 is at the initial target stop position A is judged based on the image of the mark M captured by the side monitor camera 11.

The image of the mark M captured by the side monitor camera 11 is inputted into the image-processing means 1 through the input device K. The image-processing means 1 extracts five feature points C1 through C5 from the captured image of the mark M and recognizes them on the image in two-dimensional coordinate. Based on the five feature points C1 through C5 in two-dimensional coordinate recognized by the image-processing means 1, the positional parameter calculating means 2 calculates six positional parameters of the side monitor camera 11, i.e., three-dimensional coordinate (x,y,z), a tilting angle (depression angle), a panning angle (direction angle), a swing angle (rotation angle), based on the mark M, respectively.

The following will describe the method for calculating the positional parameters by the positional parameter calculating means 2. Suppose that the position on the ground surface at which a line extending vertically from the center of the rear axle of the vehicle 7 intersects with the ground surface is the origin O of ground surface coordinate system having x-axis and y-axis in horizontal directions and z-axis in vertical direction. Also suppose that there is an image coordinate system, i.e., X-axis and Y-axis on the image captured by the side monitor camera 11. The coordinate values, Xm and Ym (m=1-5) of the feature points C1 through C5 of the mark M on the image coordinate system are expressed by the six positional parameters of the feature points C1 through C5 of the mark M in the ground surface coordinate system, i.e., the coordinate values, xm, ym, zm, the aforementioned angle parameters, Kn (n=1-3), the tilt angle, the panning angle, the swing angle, using functions F, G, as follows:

$$Xm = F(xm, ym, zm, Kn) + DXm$$

$$Ym = G(xm, ym, zm, Kn) + DYm$$

wherein DXm and DYm represent deviations between X, Y coordinates of the feature points C1 through C5 calculated by the functions, F, G and Xm, Ym coordinate values of the feature points, C1 through C5 recognized by the image-processing means 1, respectively.

In other words, ten relational expressions are formed for the six positional parameters (xm, ym, zm, Kn) by expressing five feature points, C1 through C5 in X, Y-axes, respectively. Then the positional parameters (xm, ym, zm, Kn) are found so as to minimize the square sum for the deviations, DXm, DYm, i.e., S= $\Sigma$ (DXm$^2$+DYm$^2$). Eventually, an optimization method such as simplex method, steepest descent method, Newton method, quasi-Newton method and the like may be used.

Since the positional parameters are decided by forming more than six relational expressions, wherein "six" is the number of the positional parameters (xm, ym, zm Kn) to be calculated, the positional parameters (xm, ym, zm, Kn) are found more precisely. In the first embodiment, ten relational expressions are generated for the six positional parameters (xm, ym, zm, Kn) by the feature points, C1 through C5. However, if the number of relational expressions is more than or equal to the number of positional parameters (xm, ym, zm, Kn) to be calculated, the positional parameters can be obtained. Therefore, six positional parameters (xm, ym, zm, Kn) can be calculated as long as six relational expressions are formed by at least three feature points.

Making use of the calculated positional parameters of the side monitor camera 11, the relative position determining means 3 specifies the positional relation between the vehicle 7 and the parking area S. That is, the positional relation between the side monitor camera 11 and the parking area S can be specified based on the positional parameters calculated by the positional parameter calculating means 2 and the predetermined positional relation between the mark M and the parking area S. Since the positional relation between the side monitor camera 11 and the vehicle 7 is known, the positional relation between the vehicle 7 and the parking area S is specified. Accordingly, whether the vehicle 7 is at the initial target stop position A or how far apart from the initial target stop position A the vehicle 7 stops can be recognized.

As shown in FIG. 6, when the relative position determining means 3 recognizes that the vehicle 7 has moved past the initial target stop position A and stopped at position A', the error detecting means 9 detects a position error, that is a distance between the position A' and the initial target stop position A. The vehicle moving path adding means 5 generates a third moving path L3 from the position A' to the initial target stop position A based on the position error. The third moving path L3 is a path along which the vehicle 7 is moved straight backward from the position A' to the initial target stop position A. Then the vehicle moving path adding means 5 adds a moving pattern, i.e., the third moving path L3, to the standard parking assist sequence L. Specifically, the third moving path L3 is added before the first moving path L1 forming the standard parking assist sequence L as shown in FIG. 7.

As shown in FIG. 6, when the vehicle 7 moves along the third moving path L3, the vehicle 7 reaches the initial target stop position A. Then the vehicle 7 is moved so as to reach the target parking position C from the initial target stop position A through the stop position B by moving in accordance with the standard parking assist sequence L with the aid of the parking assist apparatus 100 as shown in FIG. 4.

Thus when the vehicle 7 is moved past the initial target stop position A and stops at the position A', the third moving path L3 is added, along which the vehicle 7 is moved straight backward before moving along the first moving path L1 of the standard parking assist sequence L, so that the vehicle 7 can be moved to the target parking position C. Addition of the third moving path L3 increases the flexibility in generating a moving path for the vehicle 7 even if a large position error has occurred, i.e. even if the vehicle 7 has moved past the initial target stop position A and stopped far away therefrom.

(Second Embodiment)

The following will describe the second embodiment of the present invention. The following description will use the same reference numerals for the common elements or components in both embodiments, and the description of such elements or components in FIGS. 1 through 7 for the second embodiment will be omitted. In the parking assist apparatus 100 of the second embodiment, the vehicle 7 stops short of the initial target stop position A unlike the first embodiment. The elements or components of the parking assist apparatus of the second embodiment are substantially the same as those in the first embodiment.

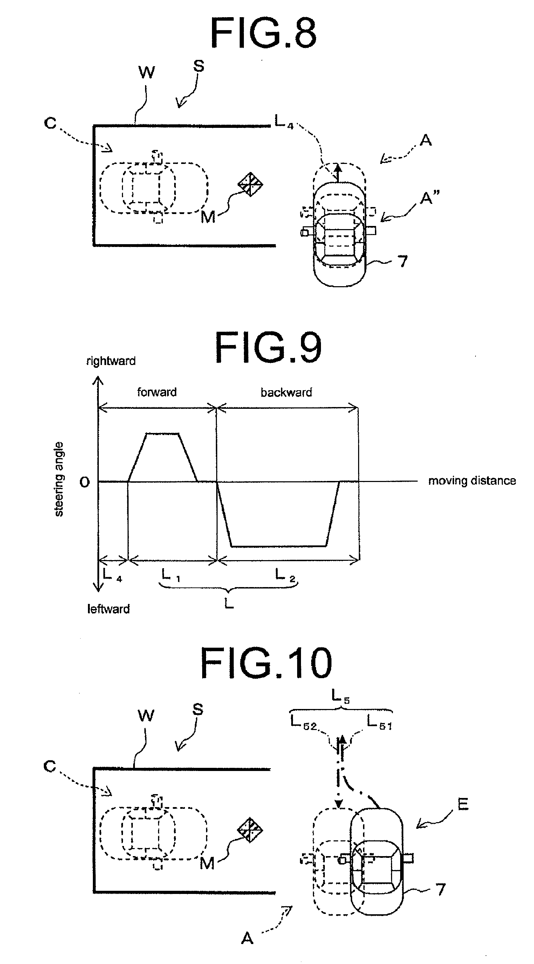

As shown in FIG. 8, when the relative position determining means 3 recognizes that the vehicle 7 is stopped at a position A" that is short of the initial target stop position A, the error detecting means 9 detects a position error, that is a distance between the position A" and the initial target stop position A. The vehicle moving path adding means 5 generates a fourth moving path L4 from the position A" to the initial target stop position A based on the distance due to the position error. The fourth moving path L4 is a path along which the vehicle 7 is moved straight frontward from the position A" to the initial target stop position A. Thus, the vehicle moving path adding means 5 adds a new moving path, i.e., the fourth moving path L4, to the standard parking assist sequence L. Specifically, the fourth moving path L4 is added before the first moving path L1 forming the standard parking assist sequence L as shown in FIG. 9.

As shown in FIG. 8, the vehicle 7 moving along the fourth moving path L4 reaches the initial target stop position A. Then the vehicle 7 reaches the target parking position C from the initial target stop position A through the stop position B by moving along the standard parking assist sequence L with the aid of the parking assist apparatus 100 as shown in FIG. 4.

Thus when the vehicle 7 is stopped short of the initial target stop position A, the fourth moving path L4 as a moving pattern along which the vehicle 7 moves straight forward, is added before the first moving path L1 of the standard parking assist sequence L, so that the same advantageous effects as the first embodiment are obtained.

(Third Embodiment)

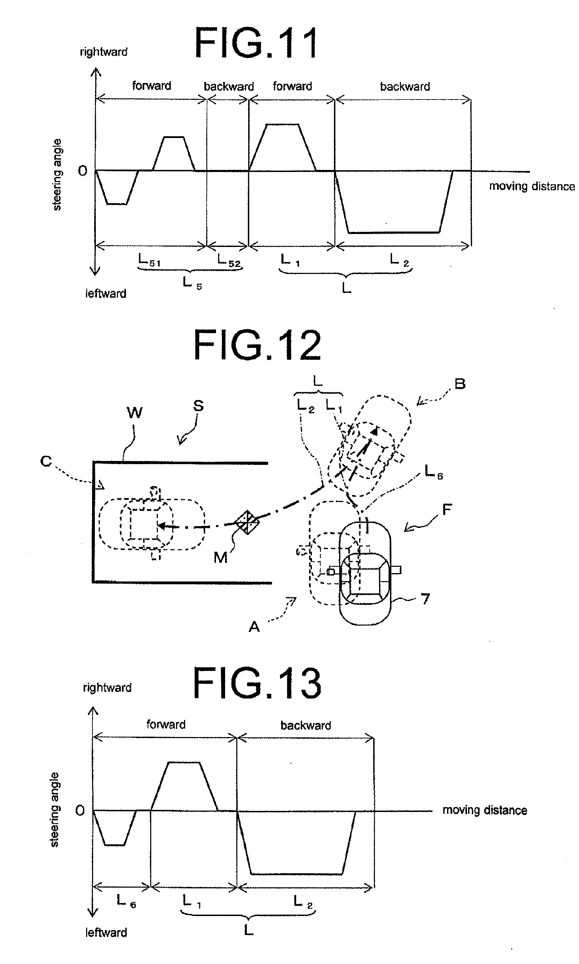

The following will describe the third embodiment of the present invention with reference to FIGS. 10 and 11. In the parking assist apparatus 100 of the third embodiment, the vehicle 7 stops at a position away from the initial target stop position in lateral direction of the vehicle, for example, a position that is further away from the target parking position C than the initial target stop position A in the first embodiment. The elements or components of the parking assist apparatus are substantially the same as those in the first embodiment.

As in the case of the first embodiment, when the relative position determining means 3 recognizes that the vehicle 7 is stopped at a position E that is further away from the parking area S than the initial target stop position A in the first embodiment, as shown in FIG. 10, the error detecting means 9 detects a a position error, i.e. the distance between the position E and the initial target stop position A. The vehicle moving path adding means 5 generates a fifth moving path L5 from the position E to the initial target stop position A based on the detected position error. In this case, the fifth moving path L5 is a combination of a moving path L51 for moving the vehicle 7 forward while turning and a moving path L52 for moving the vehicle 7 straight backward, in other words, a combination of moving patterns. As shown in FIG. 11, the path L51 includes moving forward while turning in leftward direction that makes the vehicle 7 to approach the target parking position C and also increasing the steering angle in the same direction, after a certain steering angle has been reached, moving forward while keeping that steering angle, moving forward while decreasing the steering angle, after the steering angle has reached zero, moving forward while keeping the zero steering angle, moving forward while turning in rightward direction to move away from the target parking position C and also increasing the rightward steering angle, after a certain steering angle has been reached, moving forward while keeping that steering angle, moving forward while decreasing the steering angle, and after the steering angle has reached zero, moving forward while keeping the zero steering angle. Process for moving forward while keeping the steering angle zero is added so that the driver may turn the steering wheel with a small force when he does so. Then the vehicle moving path adding means 5 adds a moving path as a moving pattern, i.e., the fifth moving path L5 to the standard parking assist sequence L. Specifically, the fifth moving path L5 is added before the first moving path L1 forming the standard parking assist sequence L as shown in FIG. 11.

As shown in FIG. 10, the vehicle 7 moving along the fifth moving path L5 reaches the initial target stop position A. Then the vehicle 7 reaches the target parking position C from the initial target stop position A through the stop position B by moving along the standard parking assist sequence L with the aid of the parking assist apparatus 100, as shown in FIG. 4.

Thus when the vehicle 7 stops at the position E further away from the parking area S than the initial target stop position A, the same advantageous effects as the first embodiment are obtained by adding the fifth moving path L5 that is a combination of the path L51 for moving forward while turning and the path L52 for moving straight backward.

The moving pattern herein used has neither a fixed moving distance nor a fixed turning radius. In other words, as long as the moving pattern of the standard parking assist sequence L shown in FIGS. 10 and 11 belongs to six patterns as described previously , each element of the moving pattern, i.e., the moving distance and the turning radius, is allowed to be changed in dimension as compared with that of the standard parking assist sequence L shown in FIGS. 4 and 5.

In the third embodiment, the vehicle 7 stops at the position E that is further away from the parking area S than the initial target stop position A. However, the vehicle 7 may stop at a position other than E that is a position, which the vehicle 7 has moved past or is short of the position E.

(Fourth Embodiment)

The following will describe the fourth embodiment of the present invention with reference to FIGS. 12 and 13. In the parking assist apparatus 100 of the fourth embodiment, the vehicle 7 stops at a position away from the initial target stop position diagonally forward or diagonally backward relative to a direction of vehicle movement, for example, a position further away from the target parking position C than the initial target stop position A and also short of the initial target stop position A as compared with the first embodiment. The elements or components of the parking assist apparatus are the same as those in the first embodiment.

As in the case of the first embodiment, when the relative position determining means 3 recognizes that the vehicle 7 has stopped at a position F that is further away from the parking area S than the initial target stop position A and also short of the initial target stop position A, the position error detecting means 9 detects a position error between the position F and the initial target stop position A. The vehicle moving path adding means 5 generates a sixth moving path L6 based on the detected position error. In this case, the sixth moving path L6 is a moving path along which the vehicle 7 moves forward while turning leftward. Unlike cases of the first through third embodiments, the sixth moving path L6 of the fourth embodiment does not lead the vehicle 7 to the initial target stop position A. As shown in FIG. 13, the sixth moving path L6 is a combination of movements for moving forward in the direction that makes the vehicle 7 to approach the target parking position C. The movements for the sixth moving path L6 as used herein refer to increasing the steering angle for the leftward movement, after a certain steering angle has been reached, moving forward while keeping the steering angle, moving forward while decreasing the steering angle and, after the steering angle has reached zero, moving forward while keeping the zero steering angle. Process for moving the vehicle 7 forward while keeping the steering angle at zero is so that the driver may turn the steering wheel with a small force when he does so. Thus, the vehicle moving path adding means 5 adds a moving path as a moving pattern, i.e., the sixth moving path L6, before the first moving path L1 forming the standard parking assist sequence L. The standard parking assist sequence L shown in FIG. 13 is a combination of plural moving patterns like the standard parking assist sequence L shown in FIG. 5. However, elements of the moving patterns of the standard parking assist sequence L in FIG. 13, i.e., moving distance and turning radius, are different from those of the standard parking assist sequence L shown in FIG. 5.

As shown in FIG. 12, the vehicle 7 moving along the sixth moving path L6 and then along the combination of the same moving patterns as the standard parking assist sequence L reaches the target parking position C through the stop position B. In the fourth embodiment, the modified assist parking sequence is a combination of moving patterns for moving the vehicle to the target parking position without through the initial target stop position.

Thus when the vehicle 7 stops at a position F further away from the parking area S than the initial target stop position A and also short of the initial target stop position A, the same advantageous effects as the first embodiment are obtained by adding the sixth moving path L6 for moving forward while turning leftward and moving straight frontward. Adding the sixth moving path L6, the stop position B reachable after forward movement can be set not too far from the parking area S. Therefore, moving the vehicle 7 into the parking area S is possible even when there is an obstacle in front of the parking area S. Moving the vehicle 7 into the parking area S in the fourth embodiment can be completed in a shorter time than in the third embodiment in which the vehicle 7 is parked into the parking area S by moving the vehicle 7 backward after moving forward while being turned.

In the first through fourth embodiments of the present invention, when the vehicle stops at a position further away from the initial target stop position, the parking assist apparatus can make it possible to move the vehicle into the target parking position even if the distance between the initial target stop position and the actual stop position as a position error is large. The parking assist apparatus according to the present invention facilitates to generate a modified parking assist sequence to the target parking position by adding at least one moving pattern to the standard parking assist sequence based on the spaced distance between the initial target stop position and the actual stop position. Thus, the parking assist apparatus according to the present invention can move the vehicle to the target parking position with high flexibility or generate a modified parking assist sequence properly.

The initial target stop position A is located at a determined position in the first through fourth embodiments. However, the initial target stop position A may be located anywhere within a predetermined area. Though the first through fourth embodiments have been described with reference to double parking, the present invention is not limited to the double parking, but it may be applied to parallel parking.

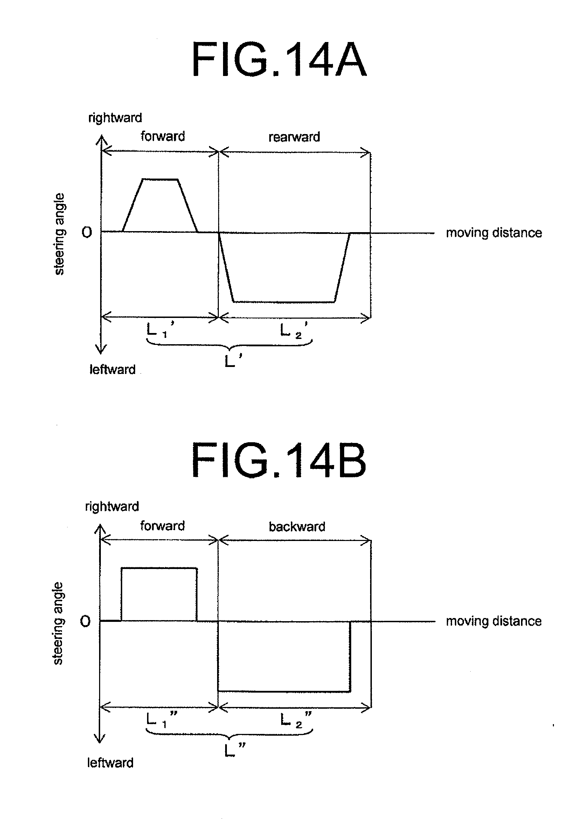

According to the present invention, the standard parking assist sequence L is not limited to those which are shown in FIGS. 4 and 5. FIG. 14A shows another example of standard parking assist sequence L' which is composed of first moving path L1' including a straight forward movement from the initial target stop position A and second moving path L2'. FIG. 14B shows an alternative standard parking assist sequence L" composed of first moving path L1" and second moving path L2", according to which steering operation is done before the movement of the vehicle 7 so that the vehicle 7 is moved straight forward or backward without steering in either direction during the movement.

The present invention does not necessarily require that a parking assist controlling should be performed by the parking assist apparatus 100 as described in the foregoing embodiment whenever the vehicle 7 stops at a position away from the initial target stop position A. When the vehicle 7 stops at a position extremely far away from the initial target stop position A, the driver may be prompted with the aid of a display and the like to drive the vehicle 7 so as to approach the initial target stop position A. When the spaced distance between the actual initial stop position and the initial target stop position A as a position error is small, parking of the vehicle 7 may be done by changing the moving distance of each moving pattern of the standard parking assist sequence as disclosed in the Japanese Patent Application Publication 2001-18821. When the spaced distance between the actual initial stop position and the initial target stop position A is large, the parking operation may be done by using the modified parking assist sequence of the present invention.

In the first through fourth embodiments, the parking assist apparatus 100 automatically performs the parking operation by using the automatic steering means 6. According to the present invention, however, the parking assist apparatus may be of a type, which provides the driver with parking assist information so that he can manually performs the parking operation. In the first through fourth embodiments, the standard parking assist sequence L includes moving forward or backward while turning in either direction. According to the present invention, however, the standard parking assist sequence L may include only moving backward while turning in either direction.

A parking assist apparatus has a vehicle moving path providing device for providing a standard parking assist sequence, wherein the standard parking assist sequence has at least one moving pattern for moving a vehicle to a target parking position in a parking. The parking assist apparatus further has a position error detecting means for detecting a position error between an initial target stop position and an actual stop position and a vehicle moving path adding means for adding at least one additional moving pattern to the standard parking assist sequence thereby to form a modified parking assist sequence from the actual stop position to the target parking position, based on the position error.

**Claims**

1.  A parking assist apparatus (100) comprising:

    a vehicle moving path providing means (4) for providing a standard parking assist sequence (L, L', L"), wherein the standard parking assist sequence has at least one moving pattern for moving a vehicle (7) to a target parking position (C) in a parking area (S),

    **characterized in that** the parking assist apparatus further has
    a position error detecting means (3, 9) for detecting a position error between an initial target stop position and an actual stop position (A', A"); and
    a vehicle moving path adding means (5) for adding at least one additional moving pattern to the standard parking assist sequence thereby to form a modified parking assist sequence from the actual stop position to the target parking position, based on the position error.

2. The parking assist apparatus according to claim 1, **characterized in that** the additional moving pattern is added before the standard parking assist sequence.

3. The parking assist apparatus according to any one of claims 1 and 2,
wherein the standard parking assist sequence has a moving pattern of moving forward while turning in a certain direction to a stop position reachable after moving forward and another moving pattern of moving backward while turning in the opposite direction from the certain direction from the stop position to the target parking position.

4. The parking assist apparatus according to claim 3, **characterized in that** the additional moving pattern is used for moving the vehicle from the actual stop position to the initial target stop position where the standard parking assist sequence starts.

5. The parking assist apparatus according to claim 4, **characterized in that** when the position error detecting means recognizes that the actual stop position is in front of the initial target stop position, the vehicle moving path adding means adds the moving pattern of moving straight backward.

6. The parking assist apparatus according to claim 4, **characterized in that** when the position error detecting means recognizes that the actual stop position is in the rear of the initial target stop position, the vehicle moving path adding means adds the moving pattern of moving straight frontward.

7. The parking assist apparatus according to claim 4, **characterized in that** when the position error detecting means recognizes that the actual stop position is away from the initial target stop position in lateral direction of the vehicle, the vehicle moving path adding means adds the moving patterns of moving forward while turning in a certain direction, moving forward while turning in a direction opposite to the certain direction subsequently and moving straight backward subsequently.

8. The parking assist apparatus according to claim 3, **characterized in that** when the position error detecting means recognizes that the actual stop position is away from the initial target stop position diagonally forward or diagonally backward relative to a direction of vehicle movement and also further away from the target parking position than the initial target stop position, the vehicle moving path adding means adds the moving pattern of moving forward while turning in a direction opposite to the certain direction.

9. The parking assist sequence according to any one of claims 1 through 8,
**characterized in that** the vehicle moving path adding means generates the moving pattern including either of the following patterns, i.e., moving straight forward, moving straight backward, moving forward while turning rightward, moving forward while turning leftward, moving backward while turning rightward and moving backward while turning leftward,
wherein the moving pattern has elements of moving distance and turning radius.

10. The parking assist apparatus according to any one of claims 1 through 9,
**characterized in that** the parking assist apparatus further has
a camera (11) for capturing an image of a mark (M) from the vehicle, wherein the camera is fixed to the vehicle with a predetermined positional relation to the vehicle, wherein the mark is fixed to the parking area with a predetermined positional relation to the parking area and has a predetermined figure; and
a positional parameter calculating means (2) for calculating a positional parameter of the camera relative to the position of the mark.

# FIG.1

# FIG.2

# FIG.3

# FIG.4

# FIG.5

rightward

steering angle

forward

backward

O — moving distance

$L_1$

$L_2$

$L$

leftward

# FIG.6

W

S

$L_3$

A'

C

7

M

A

# FIG.7

rightward

steering angle

backward    forward    backward

O — moving distance

$L_3$

$L_1$

$L_2$

$L$

leftward

# FIG.8

# FIG.9

# FIG.10

# FIG.11

rightward

steering angle

forward | backward | forward | backward

O

moving distance

$L_{51}$  $L_{52}$  $L_1$  $L_2$

$L_5$  $L$

leftward

# FIG.12

W  S

C

$\dfrac{L}{L_2 \; L_1}$  B

M  $L_6$

F

A  7  7

# FIG.13

rightward

steering angle

forward | backward

O

moving distance

$L_6$  $L_1$  $L_2$

$L$

leftward

# FIG.14A

# FIG.14B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001018821 A